# EUROPÄISCHE PATENTSCHRIFT

(11) **EP 3 990 236 B1**
(45) Veröffentlichungstag und Bekanntmachung des Hinweises auf die Patenterteilung: **03.01.2024**
(21) Anmeldenummer: 20743959.7
(22) Anmeldetag: 23.06.2020
(51) Int. Cl.: B25J 17/00, B25J 15/04

(54) **SCHNELLWECHSELSYSTEM**
QUICK CHANGE SYSTEM
SYSTÈME DE CHANGEMENT RAPIDE

(30) Priorität: 28.06.2019 DE 102019117458
(43) Veröffentlichungstag der Anmeldung: 04.05.2022
(73) Patentinhaber: Schaeffler Technologies AG & Co. KG, 91074 Herzogenaurach (DE)
(72) Erfinder: VOLK, Wolfgang, 96158 Frensdorf (DE)
(86) Internationale Anmeldenummer: PCT/DE2020/100532
(87) Internationale Veröffentlichungsnummer: WO 2020/259756

(56) Entgegenhaltungen:
- US-B1- 8 322 766

## Beschreibung

Die Erfindung betrifft ein Schnellwechselsystem umfassend mindestens ein Aufnahmeteil und mindestens zwei Wechselwerkzeuge, wobei das Aufnahmeteil mindestens eine Aufnahmeöffnung zur Aufnahme je eines Wechselwerkzeugs aufweist. Schnellwechselsysteme der eingangs genannten Art sind beispielsweise aus der DE 103 04 507 D1 bekannt. Das dort beschriebene Werkzeugwechselsystem ist zur lösbaren Kopplung von Werkzeugen an Handhabungsgeräten vorgesehen. Dabei sind ein Wechselkopf, ein Wechseladapter und Verriegelungsmittel zur Verriegelung des Wechselkopfs mit dem Wechseladapter vorhanden. Die Verriegelungsmittel umfassen ein elastisch verformbares Betätigungsorgan, das in verriegeltem Zustand Verriegelungsglieder derart federnd vorgespannt beaufschlagt, dass die Verriegelungsglieder in ihrer jeweiligen Verriegelungslage gehalten werden.

Die US 8 322 766 B1 beschreibt ein Greifersystem mit den Merkmalen des Oberbegriffs des Anspruch 1 für den Transport von Wafern mit einem Befestigungsteil und einem Tragteil, das an das Befestigungsteil schnell angebaut und davon wieder abgenommen werden kann.

Aufgabe der vorliegenden Erfindung ist es, ein alternatives Schnellwechselsystem bereitzustellen, das wenig Bauraum benötigt. Weiterhin ist es Aufgabe der Erfindung, einen Einsatzort und eine Verwendung für ein solches Schnellwechselsystem anzugeben.

Die Aufgabe wird für das Schnellwechselsystem umfassend mindestens ein Aufnahmeteil und mindestens zwei Wechselwerkzeuge gelöst, indem
- das Aufnahmeteil mindestens eine Aufnahmeöffnung zur Aufnahme eines oder je eines Wechselwerkzeugs aufweist, und
- das Wechselwerkzeug als eine Greiferbacke ausgebildet ist, wobei
mindestens ein Kugeldruckstück zur temporären Fixierung des Wechselwerkzeugs am Aufnahmeteil vorgesehen ist, wobei das Kugeldruckstück eine einseitig geschlossene Hülse umfasst, in welcher eine gefedert gelagerte Druckkugel angeordnet ist, und wobei die Druckkugel in eine Kugelaufnahmeöffnung am Wechselwerkzeug manuell einrastbar und wieder ausrastbar ist, wobei die einseitig geschlossene Hülse eine Symmetrieachse S aufweist, wobei die Druckkugel entlang der Symmetrieachse S verschieblich ist, und wobei die Kugelaufnahmeöffnung eine Mittelachse M aufweist, die in einem eingerasteten Zustand von Aufnahmeteil und Wechselwerkzeug parallel zur Symmetrieachse S verläuft.

Das Schnellwechselsystem ist besonders platzsparend einsetzbar und es kann ohne Einsatz eines weiteren Werkzeuges eingesetzt werden. Das manuelle Einrasten und Ausrasten des Wechselwerkzeuges ist möglich, da die Haltekräfte zwischen Wechselwerkzug und Aufnahmeteil in einem manuell handhabbaren Rahmen gehalten werden können. So sind Maschinen mit derartigen Schnellwechselsystemen schnell umrüstbar und benötigen einen geringen Personalaufwand.

Unter einer Kugelaufnahmeöffnung wird dabei beispielsweise eine Aussparung, ein Sackloch, ein Ausschnitt, eine durchgehende Bohrung, ein Einschnitt, eine Nut und dergleichen verstanden, die so dimensioniert ist, dass ein Einrasten einer korrespondierend dazu angeordneten Druckkugel möglich ist.

In einer besonders bevorzugten ausführungsform des erfindungsgemäßen Schnellwechselsystems verlaufen die Symmetrieachse S und die Mittelachse M im eingerasteten Zustand in einem Abstand A von 1 bis 3,5 mm parallel. Über eine Einstellung des Abstandes A der Symmetrieachse S und der Mittelachse M im eingerasteten Zustand lassen sich die Haltekräfte senkrecht zur Federwirkung zwischen Wechselwerkzeug und dem Aufnahmeteil auf ein optimal handhabbares Maß einstellen. Je kleiner der Abstand A, desto geringer ist die Haltekraft. Dabei können Haltekräfte im Bereich von 5 bis 50 N eingestellt werden.

Das Aufnahmeteil und das Wechselwerkzeug sind bevorzugt derart verrastbar, dass das Wechselwerkzeug in einer Einrastrichtung, welche senkrecht zu der Symmetrieachse S verläuft, in die Aufnahmeöffnung einschiebbar ist.

Dabei hat es sich bewährt, wenn am Wechselwerkzeug mindestens ein Wechselwerkzeug-Anschlag ausgebildet sind, der eine Festlegung der vertikalen Position des Wechselwerkzeugs in der Aufnahmeöffnung ermöglicht. Bevorzugt sind zwei Wechselwerkzeug-Anschläge vorgesehen, die ein Wandern des Wechselwerkzeugs in der Aufnahmeöffnung zuverlässig verhindern.

Die Kugelaufnahmeöffnung weist bevorzugt einen Kontaktbereich auf, welcher im eingerasteten Zustand die Druckkugel berührt, wobei der Kontaktbereich mit einem Kantenbruch, auch Fase genannt, versehen ist. Dabei hat sich ein Kantenbruch im Bereich von 0,2 bis 0,4 mm bewährt. Der Kantenbruch gibt dabei die Länge der Strecke zwischen jeder der beiden gebildeten Fasenkanten und der ursprünglich vorhandenen (und beim Einbringen der Fase entfernten) Kante der Kugelaufnahmeöffnung an.

Vorzugsweise weist das Schnellwechselsystem zwei Aufnahmeteile auf, die an einer Halterung angeordnet sind und aufeinander zu beweglich sind. Insbesondere ist hier ein motorischer Antrieb oder ein pneumatischer Antrieb der Aufnahmeteile vorgesehen, um diese inklusive der daran verrasteten Wechselwerkzeuge in Form von Greiferbacken aufeinander zu zu bewegen und ein Bauteil mittels der Greiferbacken zwischen diesen einzuspannen und zu halten. Um die Greiferbacken wieder vom Bauteil zu lösen, sind diese wieder zurück in die Ausgangslage beweglich. Die beiden Aufnahmeteile können dabei relativ zueinander verschieblich oder um eine gemeinsame Drehachse aufeinander zu verschwenkbar sein.

Alternativ sind die zwei Wechselwerkzeuge an lediglich einem Aufnahmeteil aufeinander zu beweglich angeordnet. Dazu kann das Aufnahmeteil beispielsweise einen, mittels eines motorischen Antriebs oder eines pneumatischen Antriebs elastisch deformierbaren Bereich umfassen. Um die Wechselwerkzeuge in Form von Greiferbacken aufeinander zu zu bewegen und ein Bauteil mittels der Greiferbacken zwischen diesen einzuspannen und zu halten, wird das Aufnahmeteil elastisch verformt. Um die Greiferbacken wieder vom Bauteil zu lösen, sind diese wieder zurück in die Ausgangslage beweglich, indem die elastische Deformation des Aufnahmeteils zurückgestellt wird.

Insbesondere hat sich eine Verwendung des erfindungsgemäßen Schnellwechselsystems zur Montage von Wälzlagern oder Gleitlagern oder zur Bearbeitung von Wälzlager- oder Gleitlagerbauteilen bewährt. Weiterhin hat sich eine Verwendung eines derartigen Schnellwechselsystems zur Montage oder zur Bearbeitung von Motorkomponenten als vorteilhaft erwiesen.

Die Figuren 1 bis 4 sollen erfindungsgemäße Schnellwechselsysteme beispielhaft erläutern. So zeigt
- Figur 1: ein erstes Schnellwechselsystem in dreidimensionaler Ansicht,
- Figur 2: ein einzelnes Kugeldruckstück mit eingerasteter Druckkugel in vergrößerter Ansicht im Schnittbild,
- Figur 3: ein Aufnahmeteil für ein weiteres Schnellwechselsystem in dreidimensionaler Ansicht, und
- Figur 4: einen Schnitt durch das weitere Schnellwechselsystem mit dem Aufnahmeteil gemäß Figur 3 in dreidimensionaler Ansicht.

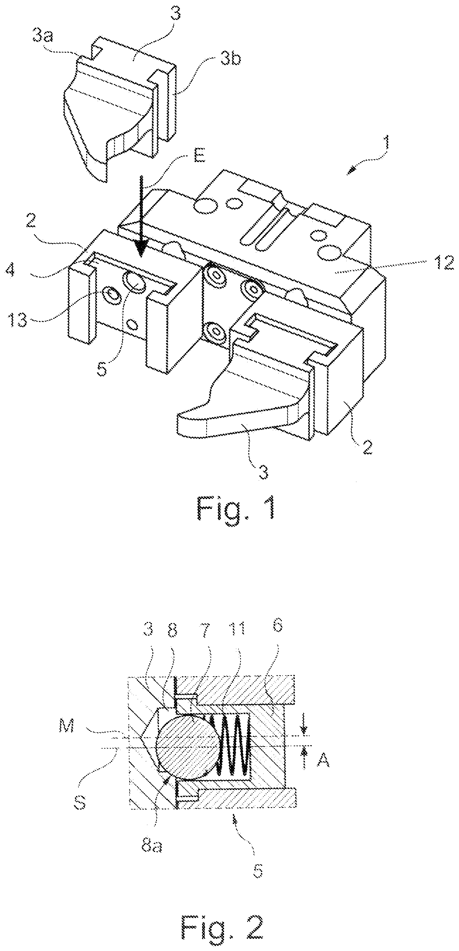

Figur 1 zeigt ein Schnellwechselsystem 1 in dreidimensionaler Ansicht. Das Schnellwechselsystem 1 umfasst hier zwei Aufnahmeteile 2 und zwei Wechselwerkzeuge 3, wobei jedes Aufnahmeteil 2 eine Aufnahmeöffnung 4 zur Aufnahme des jeweiligen Wechselwerkzeugs 3 aufweist. Die Wechselwerkzeuge 3 sind als Greiferbacken ausgebildet. Es ist weiterhin pro Aufnahmeteil 2 je ein Kugeldruckstück 5 zur temporären Fixierung des jeweiligen Wechselwerkzeugs 3 am Aufnahmeteil 2 vorhanden. Jedes Kugeldruckstück 5 umfasst eine einseitig geschlossene Hülse 6 (siehe Figur 2), in welcher eine gefedert gelagerte Druckkugel 7 angeordnet ist. Die Druckkugeln 7 sind in je eine Kugelaufnahmeöffnung 8 am Wechselwerkzeug 3 manuell einrastbar und aus diesen auch wieder ausrastbar, um beispielsweise schnell einen Wechsel auf ein andersartig dimensioniertes Wechselwerkzeug durchführen zu können. Das Wechselwerkzeug 3 wird zum Verrasten mit dem Aufnahmeteil 2 in Einrastrichtung E manuell auf das Aufnahmeteil 2 zubewegt. Die am Wechselwerkzeug 3 hier vorgesehenen Wechselwerkzeug-Anschläge 3a, 3b werden oberhalb und unterhalb des Aufnahmeteils 2 zur Anlage gebracht und das Wechselwerkzeug 3 in die Aufnahmeöffnung 4 geschoben, bis die Druckkugel 7 in die Kugelaufnahmeöffnung 8 einrastet.

Die Figur 1 zeigt auf der linken Seite den Zustand vor dem Verrasten des Wechselwerkzeugs 3 am Aufnahmeteil 2 und auf der rechten Seite den Zustand des Wechselwerkzeugs 3 nach dem Verrasten mit dem Aufnahmeteil 2. Die Aufnahmeteile 2 sind an einer Halterung 12 angeordnet. Die Aufnahmeteile 2 sind hier mittels Verschraubungen 13 an der Halterung 12 montiert.

Die Figur 2 zeigt ein einzelnes Kugeldruckstück 5 in vergrößerter Ansicht im Schnittbild. Es ist die einseitig geschlossene Hülse 6 erkennbar, in welcher eine mittels eines Federelements 11 gefedert gelagerte Druckkugel 7 angeordnet ist. Die Hülse 6 weist eine Symmetrieachse S auf, wobei die Druckkugel 7 entlang der Symmetrieachse S verschieblich ist. Als Federelement 11 ist hier eine Schraubendruckfeder vorgesehen, es können aber auch andersartig gestaltete Federelement, wie Kegelfedern, Tellerfedern, aus einem Elastomer gebildete Elemente und dergleichen, zum Einsatz kommen.

Oberhalb des Kugeldruckstücks 5 ist ein Abschnitt des Wechselwerkzeugs 3, hier im Bereich einer Kugelaufnahmeöffnung 8 in Form eines Sacklochs, erkennbar. Die Kugelaufnahmeöffnung 8 weist eine Mittelachse M auf, die in einem eingerasteten Zustand von Aufnahmeteil 2 und Wechselwerkzeug 3, wie hier dargestellt, parallel zur Symmetrieachse S verläuft.

Die Symmetrieachse S und die Mittelachse M verlaufen hier im eingerasteten Zustand in einem Abstand A im Bereich von 1 bis 3,5 mm parallel zueinander. Die Auswahl des Abstands A hat dabei direkten Einfluss auf die Haltekraft zwischen Wechselwerkzeug 3 und Aufnahmeteil 2 im eingerasteten Zustand. Zumindest im Kontaktbereich 8a, in welchem eine Kante der Kugelaufnahmeöffnung 8 in Kontakt zur Oberfläche der Druckkugel 7 gelangen würde, weist die Kugelaufnahmeöffnung 8 einen Kantenbruch auf. Auch die Wahl der Größe des Kantenbruchs hat dabei einen Einfluss auf die Haltekraft zwischen Wechselwerkzeug 3 und Aufnahmeteil 2 im eingerasteten Zustand. Die konkrete konstruktive Auslegung zu der im jeweiligen Anwendungsfall benötigten Haltekraft kann anhand weniger Versuche aufgefunden werden werden.

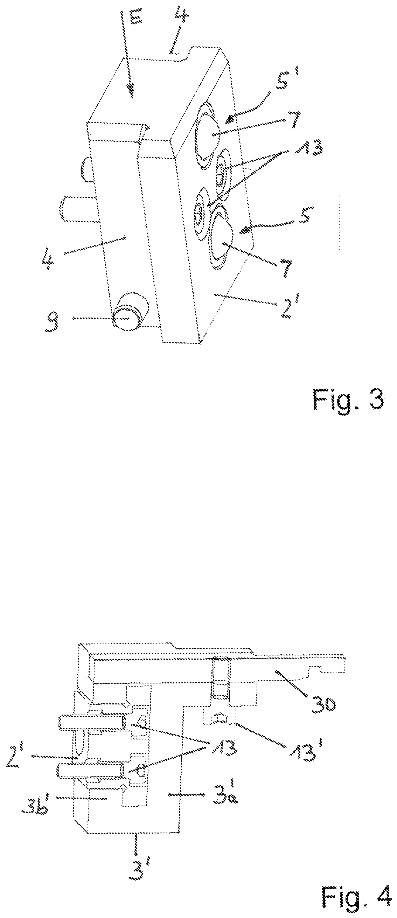

Figur 3 zeigt ein Aufnahmeteil 2' für ein weiteres Schnellwechselsystem (vergleiche Figur 4) in dreidimensionaler Ansicht. Figur 4 zeigt einen Schnitt durch einen Teil eines solchen weiteren Schnellwechselsystem (hier nur eine Greiferbacke dargestellt, Anordnung von zwei Aufnahmeteilen 2' auch hier wie in Figur 1 an einer Halterung 12 vorgesehen) mit dem Aufnahmeteil 2' gemäß Figur 3 in dreidimensionaler Ansicht. Das Aufnahmeteil 2' weist hier zwei Kugeldruckstücke 5 zur temporären Fixierung eines Wechselwerkzeugs 3' am Aufnahmeteil 2' auf. Jedes Kugeldruckstück 5 umfasst eine einseitig geschlossene Hülse 6 (siehe Figur 2), in welcher eine gefedert gelagerte Druckkugel 7 angeordnet ist. Die Druckkugeln 7 sind in je eine Kugelaufnahmeöffnung 8 am Wechselwerkzeug 3' manuell einrastbar und aus diesen auch wieder ausrastbar, um beispielsweise schnell einen Wechsel auf ein andersartig dimensioniertes Wechselwerkzeug durchführen zu können. Das Aufnahmeteil 2' weist weiterhin zwei Aufnahmeöffnungen 4 auf. Das Wechselwerkzeug 3' wird zum Verrasten mit dem Aufnahmeteil 2' in Einrastrichtung E manuell auf das Aufnahmeteil 2' zubewegt. Die am Wechselwerkzeug 3' hier vorgesehenen Wechselwerkzeug-Anschläge 3a', 3b' werden oberhalb und unterhalb des Aufnahmeteils 2' im Bereich der Aufnahmeöffnungen 4 zur Anlage gebracht und das Wechselwerkzeug 3' aufgeschoben, bis die Druckkugeln 7 der Kugeldruckstücke 5 in die korrespondierenden Kugelaufnahmeöffnungen (hier nicht sichtbar) am Wechselwerkzeug 3' einrasten und ein Anschlag 9 erreicht ist.

Das Wechselwerkzeug 3' umfasst hier eine separat über eine weitere Verschraubung 13' montierbare Greiferbacke 30. Zur Ausbildung eines weiteren Schnellwechselsystems werden zwei solche Aufnahmeteile 2' an einer Halterung 12 (vergleiche Figur 1) mittels der Verschraubungen 13 montiert und mit je einem Wechselwerkzeug 3' (umfassend jeweils eine Greiferbacke 30) versehen.

Es sind hier lediglich zwei Ausführungsbeispiele zur Bildung erfindungsgemäßer Schnellwechselsysteme dargestellt, jedoch sind gemäß der vorliegenden Erfindung weitere Ausführungsformen, wie oben beschrieben, möglich.

### Bezugszeichenliste

- 1: Schnellwechselsystem
- 2, 2': Aufnahmeteil
- 3, 3': Wechselwerkzeug
- 3a, 3b, 3a', 3b': Wechselwerkzeug-Anschlag
- 30: Greiferbacke
- 4: Aufnahmeöffnung
- 5: Kugeldruckstück
- 6: Hülse
- 7: Druckkugel
- 8: Kugelaufnahmeöffnung
- 8a: Kontaktbereich
- 9: Anschlag
- 11: Federelement
- 12: Halterung
- 13, 13': Verschraubung
- A: Abstand
- S: Symmetrieachse
- M: Mittelachse
- E: Einrastrichtung

## Patentansprüche

1. Schnellwechselsystem (1) umfassend mindestens ein Aufnahmeteil (2, 2') und mindestens zwei Wechselwerkzeuge (3, 3'), wobei
- das Aufnahmeteil (2, 2') mindestens eine Aufnahmeöffnung (4) zur Aufnahme eines oder je eines Wechselwerkzeugs (3, 3') aufweist, und
- das Wechselwerkzeug (3, 3') als eine Greiferbacke ausgebildet ist, wobei mindestens ein Kugeldruckstück (5) zur temporären Fixierung des Wechselwerkzeugs (3, 3') am Aufnahmeteil (2, 2') vorgesehen ist, wobei das Kugeldruckstück (5) eine einseitig geschlossene Hülse (6) umfasst, in welcher eine gefedert gelagerte Drucckugel (7) angeordnet ist, und wobei die Druckkugel (7) in eine Kugelaufnahmeöffnung (8) am Wechselwerkzeug (3, 3') manuell einrastbar und wieder ausrastbar ist,
**dadurch gekennzeichnet, dass** die einseitig geschlossene Hülse (6) eine Symmetrieachse (S) aufweist, wobei die Druckkugel (7) entlang der Symmetrieachse (S) verschieblich ist, und wobei die Kugelaufnahmeöffnung (8) eine Mittelachse (M) aufweist, die in einem eingerasteten Zustand von Aufnahmeteil (2) und Wechselwerkzeug (3) parallel zur Symmetrieachse (S) verläuft.

2. Schnellwechselsystem (1) nach Anspruch 1, wobei die Symmetrieachse (S) und die Mittelachse (M) im eingerasteten Zustand in einem Abstand (A) von 1 bis 3,5 mm parallel verlaufen.

3. Schnellwechselsystem (1) nach einem der Ansprüche 1 oder 2, wobei das Aufnahmeteil (2, 2') und das Wechselwerkzeug (3, 3') derart verrastbar sind, dass das Wechselwerkzeug (3, 3') in einer Einrastrichtung (E), welche senkrecht zu der Symmetrieachse (S) verläuft, in die Aufnahmeöffnung (4) einschiebbar ist.

4. Schnellwechselsystem (1) nach einem der Ansprüche 1 bis 3, wobei die Kugelaufnahmeöffnung (8) einen Kontaktbereich (8a) aufweist, welcher im eingerasteten Zustand die Druckkugel (7) berührt, wobei der Kontaktbereich (8a) mit einem Kantenbruch versehen ist.

5. Schnellwechselsystem (1) nach einem der Ansprüche 1 bis 4, wobei zwei Aufnahmeteile (2, 2') vorhanden sind, die an einer Halterung (12) angeordnet sind und wobei die beiden Aufnahmeteile (2, 2') aufeinander zu beweglich sind.

6. Schnellwechselsystem (1) nach einem der Ansprüche 1 bis 4, wobei ein Aufnahmeteil (2, 2') vorhanden ist und die zwei Wechselwerkzeuge (3, 3') an dem Aufnahmeteil (2, 2') aufeinander zu beweglich sind.

7. Verwendung des Schnellwechselsystems (1) nach einem der Ansprüche 1 bis 6 zur Montage von Wälzlagern oder Gleitlagern oder zur Bearbeitung von Wälzlager- oder Gleitlagerbauteilen, sowie zur Montage oder zur Bearbeitung von Motorkomponenten.

## Claims

1. A quick-change system (1) comprising at least one receiving part (2, 2') and at least two exchange tools (3, 3'), wherein
- the receiving part (2, 2') has at least one receiving opening (4) for receiving one or each exchange tool (3, 3'), and
- the exchange tool (3, 3') is designed as gripper jaws, wherein at least one ball catch (5) is provided for temporarily fixing the exchange tool (3, 3') on the receiving part (2, 2'), wherein the ball catch (5) comprises a sleeve (6) that is closed on one side, in which a spring-mounted press ball (7) is arranged, and wherein the press ball (7) can be manually engaged in a ball-receiving opening (8) on the exchange tool (3, 3') and disengaged again, **characterised in that** the sleeve (6) that is closed on one side has an axis of symmetry (S), wherein the press ball (7) is displaceable along the axis of symmetry (S), and wherein the ball-receiving opening (8) has a central axis (M) that runs parallel to the axis of symmetry (S) in an engaged state of the receiving part (2) and the exchange tool (3).

2. The quick-change system (1) according to claim 1, wherein the axis of symmetry (S) and the central axis (M) run parallel in the engaged state at a distance (A) of 1 to 3.5 mm.

3. The quick-change system (1) according to any one of claims 1 or 2, wherein the receiving part (2, 2') and the exchange tool (3, 3') can be engaged in such a way that the exchange tool (3, 3') can be inserted into the receiving opening (4) in an engagement direction (E), which runs perpendicular to the axis of symmetry (S).

4. The quick-change system (1) according to any one of claims 1 to 3, wherein the ball-receiving opening (8) has a contact area (8a) which, in the engaged state, touches the press ball (7), wherein the contact area (8a) is provided with an edge break.

5. The quick-change system (1) according to any one of claims 1 to 4, wherein there are two receiving parts (2, 2'), which are arranged on a holder (12) and wherein the two receiving parts (2, 2') are movable towards one another.

6. The quick-change system (1) according to any one of claims 1 to 4, wherein one receiving part (2, 2') is provided and the two exchange tools (3, 3') on the receiving part (2, 2') can be moved towards one another.

7. A use of the quick-change system (1) according to any one of claims 1 to 6 for assembling rolling bearings or sliding bearings or for machining rolling bearing or sliding bearing components, as well as for assembling or machining engine components.

## Revendications

1. Système de changement rapide (1) comprenant au moins une pièce de réception (2, 2') et au moins deux outils de changement (3, 3'), dans lequel
- la pièce de réception (2, 2') présente au moins une ouverture de réception (4) pour recevoir un ou chaque outil de changement (3, 3'), et
- l'outil de changement (3, 3') est réalisé sous forme de mâchoire de préhension, dans lequel au moins une pièce de pression à bille (5) est prévue pour fixer temporairement l'outil de changement (3, 3') sur la pièce de réception (2, 2'), dans lequel la pièce de pression à bille (5) comprend une douille (6) fermée d'un côté, dans laquelle est disposée une bille de pression (7) montée sur ressort, et dans lequel la bille de pression (7) peut être encliquetée et retirée manuellement d'une ouverture de réception de bille (8) sur l'outil de changement (3, 3'),
**caractérisé en ce que** la douille (6) fermée d'un côté présente un axe de symétrie (S), dans lequel la bille de pression (7) est déplaçable le long de l'axe de symétrie (S), et dans lequel l'ouverture de réception de bille (8) présente un axe central (M) qui, à l'état encliqueté de la pièce de réception (2) et l'outil de changement (3) s'étend parallèlement à l'axe de symétrie (S).

2. Système de changement rapide (1) selon la revendication 1, dans lequel l'axe de symétrie (S) et l'axe central (M), à l'état encliqueté, s'étendent parallèlement séparés par un écart (A) de 1 à 3,5 mm.

3. Système de changement rapide (1) selon l'une des revendications 1 ou 2, dans lequel la pièce de réception (2, 2') et l'outil de changement (3, 3') peuvent être encliquetés de telle sorte que l'outil de changement (3, 3') peut être inséré dans l'ouverture de réception (4) dans une direction d'encliquetage (E) perpendiculaire à l'axe de symétrie (S).

4. Système de changement rapide (1) selon l'une des revendications 1 à 3, dans lequel l'ouverture de réception de bille (8) présente une zone de contact (8a) qui, à l'état encliqueté, touche la bille de pression (7), dans lequel la zone de contact (8a) est munie d'un chanfrein.

5. Système de changement rapide (1) selon l'une des revendications 1 à 4, dans lequel deux pièces de réception (2, 2') sont présentes et disposées sur un support (12) et dans lequel les deux pièces de réception (2, 2') peuvent être rapprochées l'une de l'autre.

6. Système de changement rapide (1) selon l'une des revendications 1 à 4, dans lequel une pièce de réception (2, 2') est présente et les deux outils de changement (3, 3') sur la pièce de réception (2, 2') peuvent être rapprochés l'un de l'autre.

7. Utilisation du système de changement rapide (1) selon l'une des revendications 1 à 6 pour le montage de roulements ou de paliers lisses ou pour l'usinage de composants de roulements ou de paliers lisses ainsi que pour le montage ou l'usinage de composants de moteur.
